# EUROPÄISCHE PATENTSCHRIFT

(11) **EP 1 576 848 B1**
(45) Veröffentlichungstag und Bekanntmachung des Hinweises auf die Patenterteilung: **06.06.2012**
(21) Anmeldenummer: 03788918.5
(22) Anmeldetag: 24.09.2003
(51) Int. Cl.: H04L 12/14, G06Q 20/00

(54) **VERFAHREN ZUR BEREITSTELLUNG VON KOSTENPFLICHTIGEN DIENSTEN SOWIE NUTZERIDENTIFIKATIONSVORRICHTUNG UND EINRICHTUNG ZUM BEREITSTELLEN DER DIENSTE**
METHOD FOR PROVIDING PAYING SERVICES, USER IDENTIFICATION DEVICE, AND DEVICE FOR PROVIDING SAID SERVICES
PROCEDE POUR FOURNIR DES SERVICES PAYANTS, DISPOSITIF D'IDENTIFICATION D'UTILISATEUR ET DISPOSITIF DE FOURNITURE DE SERVICES

(30) Priorität: 25.09.2002 DE 10244611
(43) Veröffentlichungstag der Anmeldung: 21.09.2005
(73) Patentinhaber: SIEMENS AKTIENGESELLSCHAFT, 80333 München (DE)
(72) Erfinder: LAUMER, Josef, 81541 München (DE); SCHMIDT, Andreas, 38124 Braunschweig (DE); VAN NIEKERK, Sabine, 38228 Salzgitter (DE)
(86) Internationale Anmeldenummer: PCT/EP2003/010638
(87) Internationale Veröffentlichungsnummer: WO 2004/030405

(56) Entgegenhaltungen:
- WO-A-00/48146
- WO-A-01/99448
- GB-A- 2 372 405
- GEMPLUS, TELEFONOCA, VODAFONE GOUP: "Storage of configuration information in the USIM or SIM" 3GPP TSG-SA1-AD HOC, S1-021476, [Online] 8. Juli 2002 (2002-07-08), - 12. Juli 2002 (2002-07-12) Seite 1-5, XP002278728 Gefunden im Internet: URL:http://www.3gpp.org/ftp/tsg_sa/WG1_Ser v/TSGS1_17_Durango/Docs/S1-021476.zip> [gefunden am 2004-04-30]

## Beschreibung

Die Erfindung betrifft ein Verfahren zur Bereitstellung von kostenpflichtigen Diensten, sowie eine Nutzeridentifikationsvorrichtung und eine Einrichtung zum Bereitstellen der Dienste.

GB-A2372405 offenbart ein Verfahren zur Abrechnung eines Dienstes basierend auf dem Inhalt (content).

WO 00/48146 offenbart ein System zur Bezahlung durch Übertragung von Nachrichten mit einem Zahlungsauftrag von einer Payment Application (Bezahlungsanwendung) seitens einer SIM-Karte eines Mobilfunkendgerätes über das Mobilfunkendgerät und einen Smartcard-Server in einem Mobilfunknetz an einen Payment-Server in einem Mobilfunknetz sowie eine Quittierung der Bezahlung vom Payment server über den Smartcard- Server und das Endgerät an die Payment Application seitens der SIM Karte.

WO 01/99448 beschreibt ein Verfahren zur Übertragung von Daten zwischen einem Endgerät und einem Server eines Telekommunikationsnetzes.

Es ist bekannt in Funkkommunikationssystemen, wie beispielsweise einem nach dem "Global System Mobile" (GSM) Standard funktionierenden System, neben der Bereitstellung einer Funkversorgung zur Realisierung von kostenpflichtigen Funkverbindungen auch weitere kostenpflichtige Dienste, wie beispielesweise das Versenden von Kurnachrichten, die beispielsweise gemäß dem "Short Message Service" (SMS) Standard ausgebildet sind, zur Verfügung zu stellen.

Für eine Abrechnung bestehen bei Funkkommunikationssystemen grundsätzlich zwei Möglichkeiten. Bei der ersten Variante der Abrechnung hat ein Betreiber des Netzes Zugriff auf ein Bankkonto des Nutzers der Dienste, so dass der Nutzer im Prinzip solange die Dienste innerhalb des Netzes in Anspruch nehmen kann, wie eine Abbuchungsmöglichkeit von diesem Konto besteht. Bei der zweiten, auch mit "Prepaid-Charging" bezeichneten, Variante kann sich der Nutzer ein Guthabenkonto seitens des Betreibers durch Vorstrecken des betreffenden Guthabens sichern, so dass er entweder die Gesamtheit oder eine Teilmenge der oben genannten weiteren kostenpflichtigen Dienste nutzen kann, solange deren Kosten durch das Guthaben gedeckt sind.

Vor allem bei der letzten Variante des Abrechnens ist im Allgemeinen daher für die Bereitstellung eines kostenpflichtigen Dienstes eine Überprüfung des Guthabens notwendig.

Aus der WO01/22761 ist hierzu eine Variante bekannt, bei dem ein Nutzer den kostenpflichtigen Dienst des Versendens einer SMS initiiert, in dem er die betreffende SMS absendet. Bevor die abgesandte SMS zu seinem Ziel (Empfänger der Nachricht) weitergeleitet wird, prüft eine hierfür zuständige Instanz, ob ein ausreichendes Guthaben vorhanden ist. Abhängig von dem Ergebnis wird dann die SMS zum Empfänger geleitet oder in der Instanz terminiert.

Eine andere Variante ist aus der WO00/04701 bekannt. Bei dem dort offenbarten System ist für die Klärung des Guthabens für die Bereitstellung eines kostenpflichtigen Dienstes ein Austausch von SMS Nachrichten erforderlich.

Nachteilig bei diesen Verfahren ist, dass in den betreffenden Funkkommunikationssystemen Daten größeren Umfangs versendet werden, die vor allem im Negativfall, d.h. wenn wegen nicht ausreichender Deckung durch das Guthaben eine Bereitstellung angeforderten Dienstes verweigert wird, zu einer unangemessenen Belastung der Netzressourcen führt.

Besonders nachteilig ist dabei die Belastung der kostbaren Funkschnittstelle im Negativfall durch das Übertragen von (Nutz-)Daten größerem Umfangs.

Die der Erfindung zugrundeliegende Aufgabe ist es, eine ressourcenschonende Bereitstellung von kostenpflichtigen Diensten innerhalb eines Funkkommunikationssystems, insbesondere einem solchen der sogenannten dritten Generation, zu ermöglichen.

Diese Aufgabe wird durch die Merkmale des Verfahrensanspruchs 1 sowie durch die Nutzeridentifikationsvorrichtung gemäß Anspruch 10 gelöst.

Bei dem erfindungsgemäßen Verfahren zur Bereitstellung von kostenpflichtigen Diensten innerhalb eines, insbesondere gemäß dem "Global System Mobile" GSM oder "Universal Mobile Telecommunikations System" UMTS Standard funktionierenden, Funkkommunikationsnetzwerks, mit mindestens einem Funkkommunikationsendgerät, aufweisend eine Vorrichtung zur Nutzeridentifikation, insbesondere ein "Subscriber Identity Module" SIM oder "UMTS Subscriber Identity Module" USIM, sowie mindestens einer Netzwerkkontrolleinrichtung und mindestens einer Einrichtung zur Bereitstellung mindestens eines Dienstes, wird bei Vorliegen einer Anforderung eines der Dienste seitens des Funkkommunikationsendgerätes an die Netzwerkkontrolleinrichtung bzw. Einrichtung zum Bereitstellen der Dienste zumindest eine durch die Nutzeridentifikationsvorrichtung generierte Nachricht übermittelt.

Durch das erfindungsgemäße Verfahren wird eine Unabhängigkeit von Netzbetreibern innerhalb eines Funkkommunikationssystems erzielt, da eine genormte Instanz, die im Wesentlichen von allen Netzbetreibern zur Nutzeridentifikation verwendet wird, zum Einsatz kommt. Derartige Nutzeridentifikationsvorrichtungen zeichnen sich zudem dadurch aus, dass alle Kommunikationsendgeräte, die in dem betreffenden Funkkommunikationssystem zum Einsatz kommen, so ausgestaltet sind, dass sie eine genormte Nutzeridentifikationsvorrichtung, wie es beispielsweise die SIM oder USIM ist, aufnehmen und mit ihr kommunizieren können, so dass sowohl bereits existierende als auch zukünftige Funkkommunikationsendgeräte ohne Modifikationen eine erfindungsgemäße Bereitstellung von kostenpflichtigen Diensten durchführen können.

Erfindungsgemäß wird durch die Einrichtung zum Bereitstellen der Dienste bei Eingang der Nachricht eine Überprüfung des der Nutzeridentifikationsvorrichtung zugeordneten Kontostandes initiiert, wobei bei positivem Ergebnis der Überprüfung die Bereitstellung des Dienstes freigegeben sowie bei negativem Ergebnis der Überprüfung die Bereitstellung des Dienstes unterbunden wird. Dadurch wird erreicht, dass für eine Bereitstellung eines kostenpflichtigen Dienstes ein Minimum an Nachrichten über das jeweilige Funkkommunikationssystem versendet werden muss. Insbesondere kann die Überprüfung des Kontostandes durch die Einrichtung zum Bereitstellen des Dienstes selbst oder aufgrund einer Abfrage durch die Einrichtung zum Bereitstellen des Dienstes durch eine andere Instanz (Netzwerkkontrolleinrichtung) erfolgen.

Wird die Nachricht als ein Befehl eines auf der Nutzeridentifikationsvorrichtung implementierten, insbesondere gemäß einem "SIM Application Toolkit, SAT-" oder USIM Application Toolkit, USAT-" oder "Card Application Toolkit, CAT-", Befehlssatzes ausgestaltet, ist eine einfache Implementierung des erfindungsgemäßen Verfahrens gewährleistet, da zur Anforderung des kostenpflichtigen Dienstes lediglich dieser Befehl, zumindest als Teil der Nachricht, übertragen werden muss.

Einrichtungen zum Bereitstellen der Dienste, insbesondere in einem Client/Server basierten System, bedienen im Allgemeinen mehrere Endgeräte, so dass vorteilhafterweise zu einer eindeutigen Zuordnung die Nachricht eine das Funkkommunikationsendgerät identifizierende erste Information enthält.

Um der Einrichtung für die Bereitstellung der Dienste eine eindeutige Zuordnung zu ermöglichen, welche wiedergibt, welche Kreditabfrage zum jeweils angeforderten Dienst zugeordnet ist, enthält die Nachricht zusätzlich und/oder alternativ eine den aktuellen Dienstwunsch kennzeichnende zweite Information.

Enthält die Nachricht eine Information, die die Reihenfolge der durch das Funkkommunikationsendgerät angeforderten Dienste wiedergibt, lässt sich beispielsweise eine Stapelabarbeitung realisieren, in der die Dienste beispielsweise in Reihenfolge der Anforderung abgearbeitet werden. Diese Reihenfolge muss aber nicht notwendigerweise die Anforderungsreihenfolge sein, vielmehr ist es auch denkbar, dass beispielsweise durch das Funkkommunikationsendgerät eine Priorisierung erfolgt, die von der Information wiedergegeben wird.

Werden als kostenpflichtige Dienste der Austausch von mobilen E-Mails, "Instant Messaging", Videotelefonie, Multimedia Messaging Service und/oder (Enhanced-) Short Message Service bereitgestellt und enthält hierbei die Dienstanforderungs-Nachricht N_{DA} abhängig von der Art des angefragten Dienstes weitere für die Bereitstellung des Dienste erforderliche Daten, wird vorteilhafter Weise die Minimierung zur Bereitstellung des Dienstes erforderlicher Daten unterstützt, da beispielsweise zur Unterscheidung des jeweiligen Dienstes erforderliche Informationen bereits mit der Nachricht übertragen werden. Ebenso können mit der Nachricht bereits Parameter, die für die Umsetzung der Dienste notwendig sind, übermittelt werden. Die Einrichtung zur Bereitstellung des Dienstes wird damit schon bei Eingang der Nachricht in die Lage versetzt, unmittelbar nach positivem Ergebnis der Kontostandsabfrage den Dienst bereitzustellen, gegebenenfalls unter besonderer Berücksichtigung der in der Nachricht enthaltenen Parameter.

Die erfindungsgemäße Nutzeridentifikationsvorrichtung weist zumindest Mittel zum Erzeugen einer an eine Einrichtung zum Bereitstellen eines kostenpflichtigen Dienstes gerichteten Nachricht auf.

Die erfindungsgemäße Einrichtung zum Bereitstellen der Dienste weist eine Netzwerkkontrolleinheit mit Mitteln zur Auswertung von bei Anforderung eines der Dienste seitens des Funkkommunikationsendgerätes zumindest einer durch die Nutzeridentifikationsvorrichtung generierte Dienstanforderungs-Nachricht, Mitteln zum Initiieren des Dienstes sowie Mitteln zum Bereitstellen des Dienstes auf.

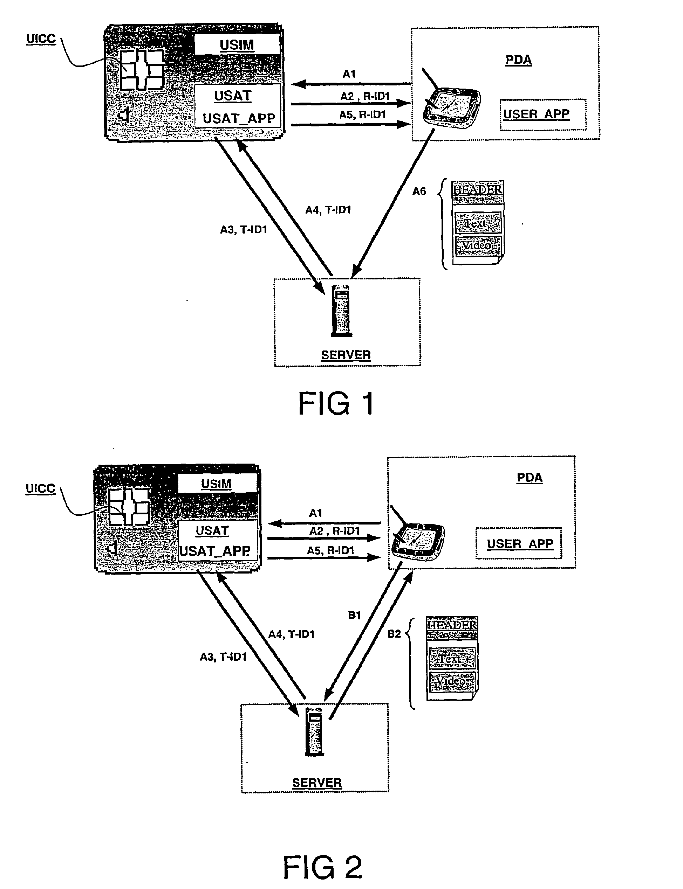

Weitere Vorteile und Einzelheiten der Erfindung werden anhand der in den Figuren 1 und 2 gezeigten Darstellungen erläutert.

Es zeigen:
- Figur 1: eine schematische Darstellung des Nachrichtenflusses bei einem Versenden einer MM (Multimedia Message; Nachricht mit multimedialen Inhalten) gemäß dem "Multimedia Messaging Service" Standard (MMS),
- Figur 2: eine schematische Darstellung des Nachrichtenflusses bei einem Abruf einer MM von einem Server.

In Figur 1 ist schematisch ein Nachrichtenaustausch A1..A6 dargestellt, der bei dem erfindungsgemäßen Verfahren im Rahmen der Bereitstellung eines kostenpflichtigen Dienstes notwendig ist, wobei für dieses Ausführungsbeispiel als Anordnungsszenario eine Anordnung wie sie in einem Funkkommunikationssystem der dritten Generation, das gemäß dem "Universal Mobile Telcommunications Standard" (UMTS) ausgestaltet ist, gewählt wurde, der Einsatz des erfindungsgemäßen Verfahrens hierin zwar bevorzugt jedoch nicht darauf beschränkt ist.

In dem hier gewählten Anordnungsszenario eines UMTS-Systems können Funkkommunikationsendgeräte ausschließlich mit einer Nutzeridentifikationsvorrichtung USIM betrieben werden, wobei das dargestellte Funkkommunikationsendgerät als "Personal Digital Assistant" PDA ausgestaltet ist.

Auf der Nutzeridentifikationsvorrichtung USIM, die im UMTS-Anordnungsszenario als "Universal Integrated Circuit Chipcard" (UICC) ausgestaltet ist, ist zumindest eine erste Applikation USAT_APP implementiert, die unter Anwendung eines durch die Nutzeridentifikationsvorrichtung interpretierbaren bzw. ausführbaren Befehlssatzes die Funktionalität einer Nutzeridentifikationsvorrichtung bereitstellt, wobei als Befehlssatz ein erfindungsgemäß um den zusätzlichen Befehl "CHECK PREPAID CREDIT" (als beispielhafter nicht einschränkend zu wertender Name) erweiterter "USIM" Applikation Toolkit Befehlssatz Verwendung findet.

Eine Einrichtung zur Bereitstellung von kostenpflichtigen Diensten ist gemäß dem dargestellten Ausführungsbeispiel als eine eine Serverfunktionalität bereitstellende Station SERVER ausgestaltet. Die Station SERVER hat in dem dargestellten Szenario zumindest die Funktion vom Funkkommunikationsendgerät PDA abgesandte multimediale Nachrichten (MMs), die nach dem "Multimedia Messaging Service" Standard ausgestaltet sind, an einen Empfänger zu vermitteln und/oder Multimediainhalte auf Anfrage zuzusenden.

Im Folgenden wird nun auf den Nachrichtenfluss A1..A6 eingegangen. Ein derartiger Nachrichtenfluss A1..A6 wird im Allgemeinen von einem Nutzer des Funkkommunikationsendgerätes ausgelöst. Dies geschieht beispielsweise dadurch, dass der Nutzer eine multimediale Nachricht (MM) verfasst hat, die multimediale Objekte, beispielsweise Bilder, Filme und/oder Audiosignale, enthält und diese versenden will. Da es sich gemäß dem Ausführungsbeispiel um einen Nutzer handelt, dessen Abrechnung über "Prepaid Charging" erfolgen soll, wird von einer dem Funkkommunikationsendgerät PDA des Nutzers zugeordneten zweiten Applikation USER_APP zunächst eine Anforderung an die in der Nutzeridentifikationsvorrichtung USIM implementierte das erfindungsgemäße Verfahren realisierende erste Applikation USAT_APP mittels einer üblicherweise als Befehl ausgestalteten ersten Nachricht A1 gesendet. Nach Erhalt dieser ersten Nachricht A1 wird von der ersten Applikation USAT_APP als zweite Nachricht eine Antwort A2 an die zweite Applikation USER_APP gesendet, wobei die Antwort A2 einen Anforderungsidentifikator R-ID1 enthält.

Zeitnah mit der Antwort A2 wird ausgehend von der ersten Applikation USAT_APP eine dritte Nachricht (Dienstanforderungsnachricht) A3 an die Station SERVER übermittelt. Diese dritte Nachricht beinhaltet einen Transaktionsidentifikator T-ID1.

Mit dem Anforderungsidentifikator R-ID1 und Transaktionsidentifikator T-ID1 wird eine Zuordnung von Überprüfung eines Guthabens zur aktuellen Anforderung zum Bereitstellen des kostenpflichtigen Dienstes der Übertragung einer multimedialen Nachricht MM ermöglicht.

Neben dem Transaktionsidentifikator T-ID1 ist in der dritten Nachricht A3 vor allem eine an die Station SERVER gerichtete Anforderung des Dienstes enthalten, wobei diese Anforderung als ein Befehl des USAT-Befehlssatzes ausgestaltet ist. Dieser neu zu definierende Befehl könnte beispielsweise mit "PREPAID CREDIT CHECK" bezeichnet sein.

Ein Vorteil der Ausgestaltung als Befehl ist, dass Befehle mit wenigen Bit, im Idealfall sogar nur durch Setzen genau eines bestimmten Wertes, kodiert werden können, so dass ihre Übertragung wenig Kapazität erfordert. Ein weiterer Vorteil ist, dass eine Station SERVER, wie sie in dem UMTS-Szenario zum Einsatz kommt, ebenso den USAT-Befehlssatz implementiert hat, so dass für derartige Anforderungen keine anderen Implementierungen vorgenommen werden müssen.

Im Allgemeinen wird durch die Station SERVER nach Erhalt der dritten Nachricht A3 eine weitere Instanz über das Guthaben befragt werden. Alternativ wäre es auch möglich, dass dies in der Station SERVER selbst erfolgt.

Um eine differenzierte Abrechnung zu ermöglichen, weil es beispielsweise unterschiedliche Arten von kostenpflichtigen Diensten gibt oder ein Dienst unterschiedliche Ausprägungen, d.h. unterschiedliche Parameter, haben kann, ist es alternativ oder ergänzend auch vorgesehen, der dritten Nachricht A3 weitere Informationen zuzufügen, die eine angepasste Abrechnung ermöglichen, wobei die erste Applikation USAT_APP diese Informationen durch die zweite Applikation USER_APP vorzugsweise durch die erste Nachricht A1 erhält und/oder diese Information selbst abruft.

Nach Erhalt des Ergebnisses wird von der Station SERVER eine vierte Nachricht A4 an die erste Applikation USAT_APP gesendet, wobei diese vierte Nachricht A4 das Ergebnis der Überprüfung, sowie den Transaktionsidentifikator T-ID1 enthält. Das Ergebnis der Überprüfung kann beispielsweise als Text (String) in der Form "credit OK" bzw. im negativen Fall "credit low" sein oder durch einfaches Setzen eines definierten Bits der vierten Nachricht A4 angezeigt werden.

Alternativ oder ergänzend sind auch mehr als nur zwei Entscheidungsstufen denkbar, mit denen beispielsweise der Benutzer auch über die Notwendigkeit einer Erhöhung des Guthabens informiert werden "credit OK, re-charge recommendation" könnte, wenn das Guthaben nur noch für den einen angefragten Dienst ausreichend ist.

Die erste Applikation USAT_APP wertet das Überprüfungsergebnis aus und sendet eine von der Auswertung abhängige fünfte Nachricht A5 an die zweite Applikation USER_APP, mit der die erste Applikation anzeigt, ob ausreichend Kredit vorhanden ist oder nicht, wobei auch an dieser Stelle alternativ oder ergänzend mehr als zwei Entscheidungsstufen denkbar sind, und somit ob die Anforderung zur Übertragung einer multimedialen Nachricht MM erfüllt werden kann oder nicht. Neben dieser Information enthält die fünfte Nachricht A5 auch den Anforderungsidentifikator R-ID1, damit die zweite Applikation USER_APP diese Nachricht bei eventuellen weiteren Anforderungen der richtigen Anforderung zuordnen kann.

Ist genug Guthaben vorhanden, wird die multimediale Nachricht MM als sechste Nachricht A6 an die Station SERVER übertragen.

Falls nicht genug Guthaben vorhanden ist, unterbleibt das Versenden der sechsten Nachricht A6 durch die zweite Applikation USER_APP.

Alternativ wäre es auch denkbar, dass bei nicht ausreichendem Guthaben die vierte Nachricht A4 und fünfte Nachricht A5 ausbleiben und die zweite Applikation USER_APP, beispielsweise nach Ablauf eins Timers, die Anforderung verwirft. D.h., dass die zweite Applikation USER_APP nur dann die sechste Nachricht abschickt, wenn aktiv von der Station SERVER die positive Indikation durch die vierte Nachricht A4 und anschließend durch das Versenden der fünften Nachricht A5 erfolgt ist.

In Figur 2 ist ausgehend vom gleichen UMTS-Anordnungsszenario ein Nachrichtenfluss A1..A5, B1..B2 dargestellt, wobei die mit obigen Beispiel identischen Elemente mit den gleichen Bezugszeichen bezeichnet sind.

Im Unterschied zu dem oben beschriebenen Vorgang agiert hier die Station SERVER als Quelle multimedialer Inhalte, die von dem Funkkommunikationsendgerät PDA abgerufen werden können.

Der zugehörige Nachrichtenfluss A1..A5, B1..B2 unterscheidet sich nur dadurch vom vorigen Ausführungsbeispiel, dass als Antwort auf das Versenden der fünften Nachricht A5 bei positiver Indikation, d.h. genügend Guthaben, von der zweiten Applikation USER_APP direkt an die Station SERVER eine Abrufnachricht B1 gesendet wird, wobei die Station SERVER unmittelbar nach Erhalt dieser Abrufnachricht B1 den abgerufenen multimedialen Inhalt B2 an die zweite Applikation USER_APP sendet.

## Patentansprüche

1. Verfahren zur Bereitstellung von kostenpflichtigen Diensten (A6, B2) innerhalb eines Funkkommunikationsnetzwerks mit einer Einrichtung zur Bereitstellung der Dienste (SERVER) sowie mit einem Funkkommunikationsendgerät (PDA), aufweisend eine Vorrichtung zur Nutzeridentifikation, wobei
- bei Anforderung (A1) eines der Dienste (A6, B2) seitens des Funkkommunikationsendgerätes (PDA) zumindest eine durch die Nutzeridentifikationsvorrichtung generierte Nachricht (A3) an die Einrichtung zum Bereitstellen der Dienste (SERVER) übermittelt wird,
- bei Eingang der Nachricht (A3) durch die Einrichtung zum Bereitstellen der Dienste (SERVER) eine Überprüfung des der Nutzeridentifikationsvorrichtung zugeordneten Kontostandes initiiert wird,
- das Ergebnis der Überprüfung durch die Einrichtung zum Bereitstellen der Dienste (SERVER) zur Nutzeridentifikationseinrichtung übermittelt wird, sowie
- durch die Nutzeridentifikationseinrichtung das übermittelte Ergebnis ausgewertet wird, und bei positivem Ergebnis die Nutzung des angeforderten Dienstes (A6, B2) freigegeben wird (A5), und bei negativem Ergebnis die Nutzung des angeforderten Dienstes (A6, B2) unterbunden wird (A5).

2. Verfahren nach dem vorstehenden Anspruch,
bei dem das Funkkommunikationsnetz gemäß dem "Global System Mobile" GSM oder "Universal Mobile Telecommunications System" UMTS Standard funktioniert.

3. Verfahren nach einem der vorstehenden Ansprüche,
bei dem die Nutzeridentifikationsvorrichtung eine "Subscriber Identity Module" SIM oder "UMTS Subscriber Identity Module" USIM umfasst.

4. Verfahren nach einem der vorstehenden Ansprüche, **dadurch gekennzeichnet , dass** die Nachricht (A3) als ein Befehl eines auf der Nutzeridentifikationsvorrichtung implementierten Befehlssatzes (USAT, USAT_APP) ausgestaltet ist.

5. Verfahren nach Anspruch 4, **dadurch gekennzeichnet, dass** die Nachricht (A3) als ein Befehl eines auf der Nutzeridentifikationsvorrichtung implementierten, gemäß einem "SIM Application Toolkit, SAT-" oder USIM Application Toolkit, USAT-" oder "Card Application Toolkit, CAT-", Befehlssatzes (USAT, USAT_APP) ausgestaltet ist.

6. Verfahren nach einem der Ansprüche 1 bis 3, **dadurch gekennzeichnet , dass** die Nachricht (A3) eine das Funkkommunikationsendgerät identifizierende erste Information enthält.

7. Verfahren nach einem der vorhergehenden Ansprüche, **dadurch gekennzeichnet, dass** die Nachricht (A3) eine den aktuellen Dienstwunsch kennzeichnende zweite Information (T-ID1) enthält.

8. Verfahren nach einem der vorhergehenden Ansprüche, **dadurch gekennzeichnet , dass** die Nachricht (A3) eine Reihenfolge der durch das Funkkommunikationsendgerät angeforderten Dienste wiedergibt.

9. Verfahren nach einem der vorhergehenden Ansprüche, **dadurch gekennzeichnet, dass**
a) als kostenpflichtige Dienste (A6, B2) der Austausch von mobilen E-Mails, "Instant Messaging", Videotelefonie, Multimedia Messaging Service und/oder (Enhanced-) Short Message Service bereitgestellt wird,
b) die Nachricht (A3) abhängig von der Art des Dienstes weitere für die Bereitstellung der Dienste erforderlichen Daten (z.B. Parameter) enthält.

10. Nutzeridentifikationsvorrichtung zur Durchführung der Schritte eines Verfahrens nach einem der vorhergehenden Ansprüche, mit
- Mitteln (UICC, USAT, USAT_APP) zum Erzeugen einer an eine Einrichtung zum Bereitstellen eines kostenpflichtigen Dienstes gerichteten Anforderungsnachricht (A3),
- Mitteln zum Empfang und zur Auswertung eines Ergebnisses einer durch die Einrichtung zum Bereitstellen des Dienstes initiierten Überprüfung eines der Nutzeridentifikationsvorrichtung zugeordneten Kontostandes, und
- Mitteln zum Freigeben der Nutzung des angeforderten Dienstes bei positivem Überprüfungsergebnis und zum Unterbinden der Nutzung des angeforderten Dienstes bei negativem Überprüfungsergebnis.

11. Nutzeridentifikationsvorrichtung nach Anspruch 10, **dadurch gekennzeichnet, dass** die Nutzeridentifikationsvorrichtung als "Subscriber Identity Module" SIM oder "UMTS Subscriber Identity Module" USIM ausgestaltet ist.

12. Nutzeridentifikationsvorrichtung nach Anspruch 10 oder 11, **dadurch gekennzeichnet, dass** ein auf der Nutzeridentifikationsvorrichtung implementierter Befehlssatz (USAT, USAT_APP) die Nachricht (A3) generiert.

13. Nutzeridentifikationsvorrichtung nach Anspruch 12, **dadurch gekennzeichnet , dass** ein auf der Nutzeridentifikationsvorrichtung gemäß dem "SIM Application Toolkit, SAT-" oder dem USIM Application Toolkit, USAT-" oder dem "Card Application Toolkit, CAT-", implementierter Befehlssatz (USAT, USAT_APP) die Nachricht (A3) generiert.

## Claims

1. Method for providing paying services (A6, B2) within a radio communication network having a device for providing the services (SERVER) and having a radio communication terminal (PDA) comprising a device for user identification, wherein
- when a request (A1) for one of the services (A6, B2) is made on the part of the radio communication terminal (PDA), at least one message (A3) generated by the user identification device is transmitted to the device for providing the services (SERVER),
- upon receipt of the message (A3) by the device for providing the services (SERVER), a check of the account status assigned to the user identification device is initiated,
- the result of the check is transmitted by the device for providing the services (SERVER) to the user identification device, and
- the transmitted result is evaluated by the user identification device and if the result of the check is positive the use of the requested service (A6, B2) is enabled (A5), and if the result of the check is negative the use of the requested service (A6, B2) is blocked (A5).

2. Method according to the preceding claim,
wherein the radio communication network operates in accordance with the "Global System Mobile" GSM standard or "Universal Mobile Telecommunications System" UMTS standard.

3. Method according to one of the preceding claims,
wherein the user identification device comprises a "Subscriber Identity Module" SIM or "UMTS Subscriber Identity Module" USIM.

4. Method according to one of the preceding claims,
**characterised in that** the message (A3) is embodied as a command of a command set (USAT, USAT_APP) implemented on the user identification device.

5. Method according to claim 4, **characterised in that** the message (A3) is embodied as a command of a command set (USAT, USAT_APP) implemented on the user identification device in accordance with a "SIM Application Toolkit, SAT" or "USIM Application Toolkit, USAT" or "Card Application Toolkit, CAT" command set.

6. Method according to one of claims 1 to 3,
**characterised in that** the message (A3) contains a first information element identifying the radio communication terminal.

7. Method according to one of the preceding claims,
**characterised in that** the message (A3) contains a second information element (T-ID1) identifying the current service request.

8. Method according to one of the preceding claims,
**characterised in that** the message (A3) reproduces a sequence of the services requested by the radio communication terminal.

9. Method according to one of the preceding claims, **characterised in that**
a) the exchange of mobile emails, "instant messaging", video telephony, Multimedia Messaging Service and/or (Enhanced) Short Message Service are provided as paying services (A6, B2),
b) depending on the type of service, the message (A3) contains further data (e.g. parameters) required for providing the services.

10. User identification device for performing the steps of a method according to one of the preceding claims, said device comprising
- means (UICC, USAT, USAT_APP) for generating a request message (A3) addressed to a device for providing a paying service,
- means for receiving and evaluating a result of a check, initiated by the device for providing the service, of an account status assigned to the user identification device, and
- means for enabling the use of the requested service if the result of the check is positive, and for blocking the use of the requested service if the result of the check is negative.

11. User identification device according to claim 10,
**characterised in that** the user identification device is embodied as a "Subscriber Identity Module" SIM or "UMTS Subscriber Identity Module" USIM.

12. User identification device according to claim 10 or 11,
**characterised in that** a command set (USAT, USAT_APP) implemented on the user identification device generates the message (A3).

13. User identification device according to claim 12,
**characterised in that** a command set (USAT, USAT_APP) implemented on the user identification device in accordance with the "SIM Application Toolkit, SAT" or the "USIM Application Toolkit, USAT" or the "Card Application Toolkit, CAT" command set generates the message (A3).

## Revendications

1. Procédé pour mettre à disposition des services payants (A6, B2) dans un réseau de radiocommunication avec un dispositif de mise à disposition des services (SERVER) et un terminal de radiocommunication (PDA), comportant un dispositif d'identification d'utilisateur,
- au moins un message (A3) généré par le dispositif d'identification d'utilisateur étant transmis au dispositif de mise à disposition des services (SERVER) en cas de demande (A1) de l'un des services (A6, B2) par le terminal de radiocommunication (PDA) ;
- une vérification de l'état du compte associé au dispositif d'identification d'utilisateur étant initialisée à l'entrée du message (A3) par le dispositif de mise à disposition des services (SERVER) ;
- le résultat de la vérification étant transmis par le dispositif de mise à disposition des services (SERVER) au dispositif d'identification d'utilisateur ; et
- le résultat transmis étant évalué par le dispositif d'identification d'utilisateur et, en cas de résultat positif, l'utilisation du service demandé (A6, B2) étant autorisée (A5) et, en cas de résultat négatif, l'utilisation du service demandé (A6, B2) étant interdite (A5).

2. Procédé selon la revendication précédente, dans lequel le réseau de radiocommunication fonctionne selon la norme « Global System Mobile » GSM ou selon la norme « Universal Mobile Telecommunications System » UMTS.

3. Procédé selon l'une des revendications précédentes, dans lequel le dispositif d'identification d'utilisateur comprend un « Subscriber Identity Module » SIM ou un « UMTS Subscriber Identity Module » USIM.

4. Procédé selon l'une des revendications précédentes, **caractérisé en ce que** le message (A3) se présente sous la forme d'une instruction d'un ensemble d'instructions (USAT, USAT_APP) implémenté dans le dispositif d'identification d'utilisateur.

5. Procédé selon la revendication 4, **caractérisé en ce que** le message (A3) se présente sous la forme d'une instruction d'un ensemble d'instructions (USAT, USAT_APP) implémenté dans le dispositif d'identification d'utilisateur conformément à un « SIM Application Toolkit, SAT » ou à un « USIM Application Toolkit, USAT » ou à un « Card Application Toolkit, CAT ».

6. Procédé selon l'une des revendications 1 à 3, **caractérisé en ce que** le message (A3) contient une première information identifiant le terminal de radiocommunication.

7. Procédé selon l'une des revendications précédentes, **caractérisé en ce que** le message (A3) contient une deuxième information (T-ID1) caractérisant la demande de service actuelle.

8. Procédé selon l'une des revendications précédentes, **caractérisé en ce que** le message (A3) reproduit un ordre des services demandés par le terminal de radiocommunication.

9. Procédé selon l'une des revendications précédentes, **caractérisé en ce que** :
a) sont mis à disposition, en tant que services payants (A6, B2), l'échange de courriers électroniques mobiles, l' « Instant Messaging », la vidéotéléphonie, le service de messagerie multimedia et/ou le service de messages courts (amélioré) ;
b) le message (A3) contient, en fonction du type du service, d'autres données (des paramètres, par exemple) requises pour la mise à disposition des services.

10. Dispositif d'identification d'utilisateur pour exécuter les étapes d'un procédé selon l'une des revendications précédentes, avec :
- des moyens (UICC, USAT, USAT_APP) pour générer un message de requête (A3) adressé à un dispositif de mise à disposition d'un service payant ;
- des moyens pour recevoir et évaluer un résultat d'une vérification, initialisée par le dispositif de mise à disposition du service, d'un état de compte associé au dispositif d'identification d'utilisateur ; et
- des moyens pour autoriser l'utilisation du service demandé en cas de résultat positif de la vérification et pour interdire l'utilisation du service demandé en cas de résultat négatif de la vérification.

11. Dispositif d'identification d'utilisateur selon la revendication 10, **caractérisé en ce que** le dispositif d'identification d'utilisateur se présente sous la forme d'un « Subscriber Identity Module » SIM ou d'un « UMTS Subscriber Identity Module » USIM.

12. Dispositif d'identification d'utilisateur selon la revendication 10 ou 11, **caractérisé en ce qu'**un ensemble d'instructions (USAT, USAT_APP) implémenté dans le dispositif d'identification d'utilisateur génère le message (A3).

13. Dispositif d'identification d'utilisateur selon la revendication 12, **caractérisé en ce qu'**un ensemble d'instructions (USAT, USAT_APP) implémenté dans le dispositif d'identification d'utilisateur conformément au « SIM Application Toolkit, SAT » ou au « USIM Application Toolkit, USAT » ou au « Card Application Toolkit, CAT » génère le message (A3).
